**Europäisches Patentamt**

**European Patent Office**

**Office européen des brevets**

(19)

(11) Veröffentlichungsnummer : **0 470 988 B1**

(12) **EUROPÄISCHE PATENTSCHRIFT**

(45) Veröffentlichungstag der Patentschrift :
**14.12.94 Patentblatt 94/50**

(51) Int. Cl.⁵ : **H04N 7/087**

(21) Anmeldenummer : **90907026.0**

(22) Anmeldetag : **03.05.90**

(86) Internationale Anmeldenummer :
**PCT/EP90/00712**

(87) Internationale Veröffentlichungsnummer :
**WO 90/13970 15.11.90 Gazette 90/26**

(54) **VERFAHREN ZUM ÜBERTRAGEN VON TELETEXTDATEN UND EINRICHTUNG ZUR DURCHFÜHRUNG DES VERFAHRENS.**

(30) Priorität : **03.05.89 DE 3914697**
**11.11.89 DE 3937653**

(43) Veröffentlichungstag der Anmeldung :
**19.02.92 Patentblatt 92/08**

(45) Bekanntmachung des Hinweises auf die
Patenterteilung :
**14.12.94 Patentblatt 94/50**

(84) Benannte Vertragsstaaten :
**AT BE CH DE DK ES FR GB IT LI LU NL SE**

(56) Entgegenhaltungen :
**EP-A- 264 565**
**GB-A- 2 146 878**
**US-A- 4 614 972**

(56) Entgegenhaltungen :
**REVUE HF. XIII No. 10, 1987, OPHAIN BE**
**pages 283 - 296; Ir K. VAN BRUWAENE: "DE**
**EVOLUTIE VAN TELETEKST" see page 289**
**ROYAL TELEVISION SOCIETY JOURNAL. vol.**
**18, No. 5, October 1980, LONDON GB pages 43**
**- 45; J.P. CHAMBERS: "POTENTIAL OF EX-**
**TENDED TELETEXT"**
**ELECTRONICS COMPONENTS AND APPLICA-**
**TIONS, vol. 6, No. 1, 1984, EINDHOVEN NL**
**pages 15 - 29; J. R. KINGHORN: "COMPUTER**
**CONTROLLED TELETEXT"**

(73) Patentinhaber : **Thomson Consumer**
**Electronics Sales GmbH**
**Göttinger Chaussee 76**
**D-30453 Hannover (DE)**

(72) Erfinder : **EITZ, Gerhard**
**Narzissenweg 5**
**D-8011 Poing (DE)**
Erfinder : **MÖLL, Gerhard**
**Reichartstrasse 17**
**D-8032 Gräfelfing (DE)**

EP 0 470 988 B1

**Beschreibung**

Die Erfindung bezieht sich auf ein Verfahren gemäß dem Oberbegriff des Patentanspruchs 1. Ein derartiges Verfahren ist aus der GB-A-2 187 614 bekannt.

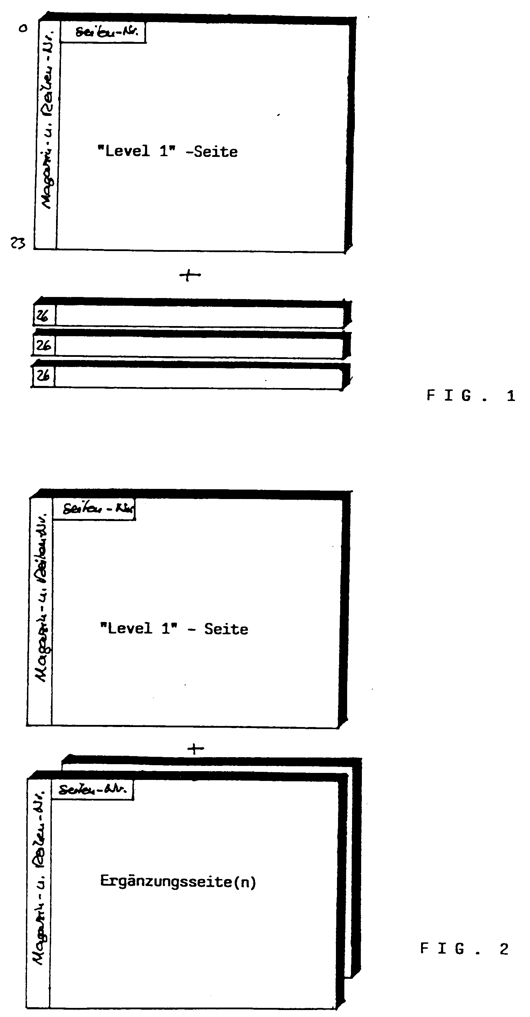

Bei dem herkömmlichen, derzeit in Europa (mit Ausnahme von Frankreich) benutzten Teletextsystem wird lediglich von dem sogenannten "Level 1" des Teletext-Standards WST (world system teletext) Gebrauch gemacht, welcher nur über einen eingeschränkten Grundzeichensatz für Texte und graphische Darstellungen verfügt. Sonderzeichen, Feinstrukturen oder Farbschattierungen lassen sich mit diesem "Level 1"-System nicht wiedergeben. Zur Vermeidung dieser Unzulänglichkeiten sieht der WST-Standard besonders in seinen Ausbaustufen "Level 2" und "Level 3" die Übertragung von Ergänzungsdaten in sogenannten Pseudoreihen (auch "ghost rows" genannt) vor, welche vom "Level 1" nicht genutzte, jedoch im Übertragungsformat freigehaltene, adressierbare Reihennummern tragen. Bei Bedarf müssen mehrere Reihen mit derselben Reihennummer zur Übertragung der notwendigen Menge von Ergänzungsdaten verwendet werden, wie anhand von Fig. 1 für die Reihennummer # 26 veranschaulicht ist (vgl. auch Zeitschrift "Rundfunktechnische Mitteilungen", 27. Jg. (1983), Heft 3, Seiten 116 - 134).

Für spezielle Ergänzungsdaten, nämlich für frei definierbare Zeichen (DRCS-Zeichen = dynamically redefinable character sets) werden gemäß WST-Standard bzw. der GB-A-2 187 614 zusätzlich in den Teletextzyklus mit Hexadezimalnumerierung eingefügte Pseudoseiten verwendet, die gegenüber dem Grundseitenformat (Reihen 0 - 23) ein erweitertes Format (Reihen 0 - 24) aufweisen und ausschließlich Informationen über die Bitstruktur der DRCS-Zeichen enthalten. Die jeweilige Darstellungsart ("mode") der DRCS-Zeichen wird in einer Pseudoreihe (Reihe 28) angegeben. Die Position der Zeichenplätze in der Grundseite, welche mittels der DRCS-Zeicher ergänzt werden sollen, sowie die Adresse des betreffenden DRCS-Zeichens in der Pseudoseite werden in die Pseudoreihe 26 der betreffenden Grundseite angegeben. Ferner wird in der Pseudoreihe 27 die Seitennummer der zugeordneten Pseudoseite angegeben.

Infolge der Aufteilung der Information für Struktur, Darstellungsart und Adressierung der Ergänzungsdaten auf Pseudoreihen und Pseudoseiten ist das bekannte Verfahren nicht nur auf DRCS-Zeichen beschränkt, sondern erweist sich auch als umständlich und entsprechend störanfällig.

Unabhängig davon, ob nur Pseudoreihen allein oder Pseudoreihen und Pseudoseiten zusammen übertragen werden, besteht das Problem, daß der Teletext-Empfänger keine Information über die Anzahl der jeweils zu einer Teletextseite (Grunddaten) übertragenen Pseudoreihen erhält. Der Decoder "weiß" daher nicht, ob, welche und ggf. wieviele Pseudoreihen zu einer Teletextseite ausgesendet worden sind. Eine korrekte Auswertung kann daher nur dann erfolgen, wenn die gewünschte Teletextseite und alle zugeordneten Pseudoreihen vollständig empfangen werden. Ferner muß in dem Decoder für jede abzuspeichernde Teletextseite ein zusätzlicher Speicherraum, z.B. 4 kByte, ständig verfügbar gehalten werden, welcher bei fehlender Übertragung von Pseudoreihen nicht anderweitig nutzbar ist.

Die Aufgabe der Erfindung besteht demgegenüber darin, bei einem Verfahren der eingangs erwähnten Art eine effizientere Übertragung oder schnellere Verarbeitung der Ergänzungsdaten zu ermöglichen und gleichzeitig die volle Kompatibilität zu bestehenden, nach "Level 1" arbeitenden Teletextempfänger zu gewährleisten.

Diese Aufgabe wird erfindungsgemäß durch die in Anspruch 1 angegebenen Merkmale gelöst.

In Weiterbildung der Erfindung werden gemäß Anspruch 2 in wenigstens einer Ergänzungsseite die Ergänzungsdaten für mehrere oder für alle Teletextseiten übertragen. Dadurch läßt sich in vorteilhafter Weise die Anzahl der Ergänzungsseiten verringern.

Weitere vorteilhafte Ausgestaltungen und Weiterbildungen des erfindungsgemäßen Verfahrens ergeben sich aus den Ansprüchen 3 bis 11.

Die Erfindung wird nachfolgend anhand von in der Zeichnung dargestellten Ausführungsbeispielen näher erläutert.

Dabei zeigen:

Fig. 1 eine schematische Darstellung des bekannten Teletext-WST-Standards;

Fig. 2 eine schematische Darstellung des erfindungsgemäßen Verfahrens gemäß einem ersten Ausführungsbeispiel,

Fig. 3 eine schematische Darstellung des erfindungsgemäßen Verfahrens gemäß einem zweiten Ausführungsbeispiel und

Fig. 4 ein Blockschaltbild einer Ausführungsform einer Schaltungsanordnung zur Durchführung des erfindungsgemäßen Verfahrens.

Im Unterschied zu dem Teletext-WSR-Standard (Fig. 1) werden zusätzlich zu herkömmlichen Teletextseiten ("Grundseiten") sogenannte Ergänzungsseiten übertragen, die vorzugsweise im Format der Teletextseiten strukturiert sind.

2

Bei dem erfindungsgemäßen Verfahren gemäß einem ersten Ausführungsbeispiel (Fig. 2) werden zusätzlich zu herkömmlichen Teletextseiten ("Grundseiten") sogenannte Ergänzungsseiten übertragen, die vorzugsweise im Format der Teletextseiten strukturiert sind.

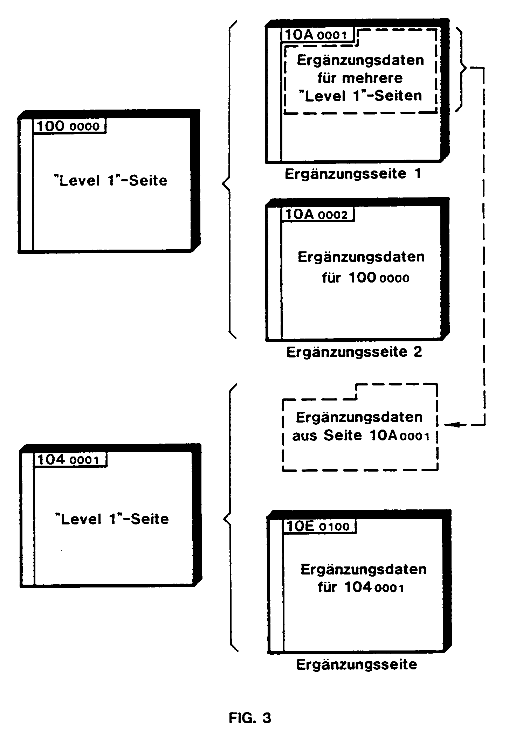

Bei dem erfindungsgemäßen Verfahren gemäß einem zweiten Ausführungsbeispiel (Fig. 3) werden in wenigstens einer Ergänzungsseite Ergänzungsdaten für mehrere oder für alle Teletextseiten übertragen.

Wie Fig. 2 und Fig. 3 zeigen, enthalten die zu einer bestimmten Teletextseite zugeordnete(n) Ergänzungsseite(n) die für einen höheren WSR-Level (z.B. Level 2/3) fehlenden Daten ("Ergänzungsdaten").

In Fig. 3 ist in dem zweiten Ausführungsbeispiel gemäß der Erfindung als Beispiel die "Level 1"-Seite 100 mit dem Subcode 0000 und den Ergänzungsseiten 10A 0001 und 10A 0002 angegeben. Die erste hexadezimal numerierte Ergänzungsseite 10A 0001 enthält einen besonders gekennzeichneten Abschnitt, in dem Ergänzungsdaten enthalten sind, die nicht nur für die zugehörige "Level 1"-Seite 100 0000, sondern auch für andere "Level 1"-Seiten - beispielsweise für die Seite 104 0001 - gültig sind. So setzen sich hier in diesem Beispiel die Ergänzungsdaten für 104 0001 aus dem besonders gekennzeichneten Abschnitt von Seite 10A 0001, die nicht gesondert (nochmals) gesendet wird, und der zugehörigen Ergänzungsseite 10E 0100 zusammen.

Für Grundseiten mit Seitennummern ab 200 gilt Entsprechendes. Beispielsweise sind der Grundseite 104 die Ergänzungsseite 10E, der Grundseite 109 die Ergänzungsseite 1E0 und der Grundseite 199 die Ergänzungsseite 1E9 zugeordnet.

Ein wesentliches Erfindungsmerkmal besteht darin, daß Ergänzungsdaten für untergeordnete Seiten unter Seitennummern von übergeordneten Seitennummern übertragen werden. Bei einem bekannten Teletext-Übertragungsverfahren ("TOP"-System) wird in einer gesonderten Teletext-Seite ("Basic-TOP-Table") eine Information über jede Grundseite im Zyklus und deren Zuordnung zu anderen Seiten in Form einer Klassifizierung in Seite , Gruppe, Block übertragen. Diese Klassifizierung wird vorliegend benutzt, um über- und untergeordnete Seiten voneinander zu unterscheiden. Dabei ist für jede Grundseite ein genau definierter Platz (nach Spalten und Reihen) auf der gesonderten Seite (BT-Table) vorgesehen.

Die nachstehende Tabelle I gibt an, welche hexadezimalen Ergänzungsseitennummern den einzelnen Grundseiten zwischen 100 und 199 beispielsweise zugeordnet sind.

## Tabelle I

```
100 101 102 103 104 105 106 107 108 109    10A 10B 10C 10D 10E   10F
`------------------´ `------------------´    `------------------´
110     !_ _ _ _ _ _ _ _!_ _ _ _ _ _ _ _;              11F
                        !
120                     !
              - - < - -
...                     !
180                     !         189  18A            18E  18F
190   .    .   194!195  .    .   199  19A  .    .   19E  19F
`------------------´!`------------------´    `------------------´
        !_ _ _ _ _!_ _ _ _ _!_ _ _ _ _ _ _;
                   !         !
                   !         !
1A0 .              !         !   . 1A9  1AA                1AF
    !              !         !   !
1B0 !              !         !   ! 1B9
    !              !         !   !
1C0 ! - - - < - - -        - > ! 1C9
    !                         !
1D0 !                         ! 1D9
    !                         !
1E0 ´                         ` 1E9  1EA                   1EF


1F0                           1F9  1FA                   1FF
```

Als eine weitere gesonderte Seite ("Pseudo-Table" oder "PT") wird nach der gleichen Spalten- und Reihenzuordnung wie in der BT-Tabelle die PT-Tabelle übertragen, deren Codierung in Tabelle II dargestellt wird. Die PT-Tabelle enthält für jede Grundseite (an deren Platz sich ein bestimmter PT-Code befindet) Angaben über die Anzahl der Ergänzungsseiten und eine zusätzliche Information darüber, ob weitere Ergänzungsdaten in übergeordneten Seiten vorhanden sind.

Tabelle II

| Anzahl der Ergänzungsseiten | ! Weitere Ergänzungsdaten in übergeordneten Seiten | ! Code PT |
|---|---|---|
| 0 | ! - | ! 0 |
| 1 | ! - | ! 1 |
| 2 | ! - | ! 2 |
| 3 | ! - | ! 3 |
| 4 | ! - | ! 4 |
| 5 | ! - | ! 5 |
| 6 | ! - | ! 6 |
| 7 | ! - | ! 7 |
| 0 | ! ja | ! 8 |
| 1 | ! ja | ! 9 |
| 2 | ! ja | ! A |
| 3 | ! ja | ! B |
| 4 | ! ja | ! C |
| 5 | ! ja | ! D |
| 6 | ! ja | ! E |
| 7 | ! ja | ! F |

Die nachstehende Tabelle III zeigt die Rechenvorschrift auf, mit der bei Mehrfachseiten (=Grundseite plus Unterseite(n)) aus dem Subcode der Grundseite und der Anzahl der Ergänzungsseiten (Tabelle II) auf den Subcode der Ergänzungsseiten geschlossen werden kann. Beispielsweise besitzen zwei Ergänzungsseiten der Grundseite 0001 den Subcode 0101 und 0102. Der Subcode der Grundseite stellt eine "erweiterte Seitennummer" dar, so haben z.B. die Unterseiten der Mehrfachseite Nr. 120 die Seitennummern 120 0001, 120 0002 ... . Die Nummernbestandteile 0001, 0002 stellen die Subcodes dar.

Tabelle III

| Grundseite Subcode | Anzahl der Ergän.seiten | Ergän.seite Subcode | Bemerkung |
|---|---|---|---|
| 0000 | 1 | 0000 | Grundseite mit 1 Eg |
| 0000 | XX | 0001 0002 .. 00XX | Grundseite mit XX Eg |
| 0001 | 1 | 0100 | 1. Unters. mit 1 Eg |
| 00YY | X | YY01 YY02 .. YYXX | YY. Unters. mit XX Eg |

In der nachstehenden Tabelle IV ist anhand eines Beispiels ein Zyklus nach dem erfindungsgemäßen Verfahren ("Höherer-Level-Zyklus") dargestellt.

## Tabelle IV

|  |  |  | CODE PT | Ergänzungsdaten aus folgenden Ergän.seite (Eg) |
|---|---|---|---|---|
| 100 | Block A |  | 2 | 2 Eg v.100 |
| 110 | Gruppe A1 |  | 1 | 1 Eg v.110 |
| 111 | Seite A1-1 |  | 8 | 1 Eg v.110 |
| 112 | Seite A1-2 |  | 9 | 1 Eg v.110 + 1 Eg v.112 |
| 120 | Gruppe A2 |  |  |  |
| 121 | Seite A2-1 |  |  |  |
| 200 | Block B |  | 8 | 2 Eg v.100 |
| 210 | Gruppe B1 |  | 9 | 2 Eg v.100 + 1 Eg v.210 |
| 211 | Seite B1-1 |  | 9 | 2 Eg v.100 + 1 Eg v.210 + 1 Eg v.211 |
| 212 | Seite B1-2 |  | 3 | 3 Eg v.212 |
| 220 | Gruppe B2 |  |  |  |
| 221 | Seite B2-1 |  |  |  |

In dem dargestellten Zyklus sind mehrere Seiten zu einer Gruppe und mehrere Gruppen zu einem Block zusammengefaßt. Ein Code 1 aus der Tabelle II signalisiert beispielsweise bei Seite 110, daß nur eine Ergänzungsseite von der Seite 110 und keine weiteren Ergänzungsseiten von der übergeordneten Seite 100 vorliegen. Die Seite 111 mit dem PT-Code 8 signalisiert dagegen, daß keine eigenen Ergänzungsseiten vorhanden sind, aber besonders gekennzeichnete Abschnitte in der Ergänzungsseite von der Seite 110 berücksichtigt werden müssen.

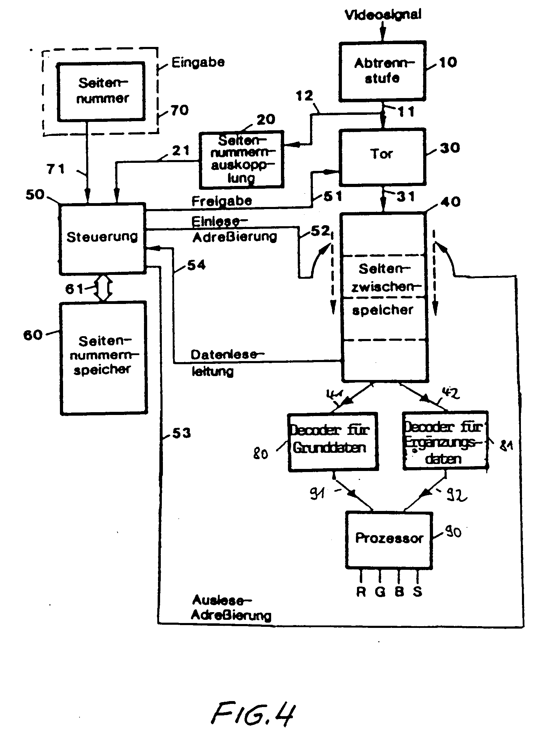

Empfängerseitig (Fig. 4) werden Grunddaten und Ergänzungsdaten gleichermaßen in einer Abtrennstufe 10 von dem Videosignal abgetrennt und zu einzelnen Teletextseiten zusammengestellt. Jede Teletextseite wird über die Ausgangsleitung 11 einer Torschaltung 30 zugeführt, welche die zugeführte Teletextseite über eine Leseleitung 31 einem Seitenzwischenspeicher 40 zuführt, falls eine noch näher zu erläuternde Steuerschaltung 50 auf einer Ausgangsleitung 51 der Torschaltung 30 ein Freigabesignal zuführt. Ferner bewirkt die Steuerungsschaltung 50 über eine weitere Ausgangsleitung 52 eine Adressierung des Seitenzwischenspeichers 40 für den Einlesevorgang. Der Auslesevorgang des Seitenzwischenspeichers 40 erfolgt ebenfalls unter der Steuerung der Steuerungsschaltung 50 über eine dritte Ausgangsleitung 53.

Der Steuerungsschaltung 50 werden über eine Leitung 21 von einer Seitennummern-Auskopplungsschaltung 20 die Seitennummern der auf der Leitung auftretenden Teletextseiten zugeführt. Hierzu detektiert die Auskopplungsschaltung 20 die Nummer jeder von der Leitung 11 über eine Abzweigleitung 12 zugeführten Teletextseite. Ferner ist die Steuerschaltung 50 mit der vom Benutzer bedienten Eingabe 70 verbunden. Die gewünschte Seitennummer wird der Steuerschaltung 50 über eine Leitung 71 zugeführt. Trifft eine gesonderte Seite mit den Seitennummern der Grundseiten (sog. "Basic-TOP-Table") oder eine andere Sonderseite (PT-Tabelle gemäß Tabelle II) mit der Information, ob besonders gekennzeichnete Abschnitte mit Ergänzungsdaten für untergeordnete Seiten enthalten sind, und/oder mit der Anzahl der Ergänzungsseiten für jede zugeordnete Grundseite ein, welche im Zyklus der Teletextseiten bzw. in einem Zyklusabschnitt auftreten, so werden diese Sonderseiten bzw. wird die betreffende Sonderseite automatisch dem Seitenzwischenspeicher 40 zugeführt. Die Daten dieser zwischengespeicherten Sonderseiten werden über die Datenleseleitung 54 zu der Steuerungsschaltung 50 übertragen, welche die Seitennummern und die zugehörige Anzahl der Ergänzungsdaten für jede Seitennummer ermittelt und in einem Seitennummernspeicher 60 abgelegt, welcher über einen bidirektionalen Bus 61 mit der Steuerungsschaltung 50 verbunden ist.

Es sei nun bei der empfängerseitigen Einrichtung zur Durchführung des Verfahrens gemäß dem ersten Ausführungsbeispiel angenommen, daß der Benutzer z.B. durch Betätigen der Tastatur 70 die Seite # 100 angewählt hat. Die Steuerungsschaltung 50 ermittelt zu dieser angewählten Seite die Anzahl und die Seitennummern der zugeordneten Ergänzungsseiten. Wird beispielsweise die Grundseite # 100 durch zwei Ergänzungsseiten ergänzt (Fig. 2), so tragen diese beiden Ergänzungsseiten die Seitennummer # 10A mit den Unterseiten # 0001 und 0002. Durch eine eindeutige, festgelegte Beziehung zwischen den Grundseiten # 100 bis 899 und den zugehörigen Ergänzungsseiten 10A bis 1E9 (welche im betrachteten Beispiel in hexadezimaler Numerierung vorliegen), können die Seitenummern der Ergänzungsseiten leicht errechnet oder anhand spezieller Tabellen ermittelt werden. Sobald eine dieser Seiten im Zyklus auftritt, was der Steuerungsschaltung 50 von der Auskopplungsschaltung 20 mitgeteilt wird, erscheint auf der Ausgangsleitung 51 ein Freigabesignal für die Torschaltung 30, woraufhin die Grundseite # 100 beispielsweise über die Leitung 31 in den Speicherplatz # 1, die Ergänzungsseite 10A 0001 in den Speicherplatz # 2 und die Ergänzungsseite 10A 0002 in den Speicherplatz # 3 des Seitenzwischenspeichers 40 abgelegt werden. Die Adressierung auf die Speicherplätze erfolgt, wie bereits erwähnt, unter der Steuerung der Steuerungsschaltung 50 über die Ausgangsleitung 52. Nach erfolgtem Einlesen aller drei betrachteten Seiten erzeugt die Steuerungsschaltung 50 über die Ausgangsleitung 53 einen Auslesebefehl für den Speicherplatz # 1, worauf die Grundseite # 100 über die Leitung 41 aus dem Seitenzwischenspeicher 40 an einen Decoder für Grunddaten 80 ausgelesen wird. Der Decoder für Grunddaten 80 decodiert die Seite # 100 in geeigneter Weise und übergibt die daraus resultierenden Daten über die Leitung 91 an einen Prozessor 90. Außerdem werden von der Steuerungsschaltung 50 über die Ausgangsleitung 53 zwei Auslesebefehle für die Speicherplätze # 2 und # 3 gegeben und die Ergänzungsseiten 10A 0001 und 10A 0002 nacheinander über die Leitung 42 an einen Decoder für Ergänzungsdaten 81 ausgelesen. Der Decoder für Ergänzungsdaten 81 decodiert die Daten der Ergänzungsseiten in geeigneter Weise und übergibt die resultierenden Daten über die Leitung 92 an den Prozessor 90, welcher die decodierten Daten aller drei Seiten zusammen als Videosignal mit dem Komponenten R, G, B und S beispielsweise auf dem Bildschirm eines Fernsehempfängers darstellt.

Es sei nun die empfängerseitige Einrichtung so modifiziert, daß sie Mittel zur Durchführung des Verfahrens gemäß dem zweiten Ausführungsbeispiel aufweist. Der Einfachheit halber werden nachfolgend dieselben Bezeichnungen und Bezugszeichen wie zuvor verwendet. Es sei nun angenommen, daß der Benutzer z.B. durch Betätigen der Tastatur 70 die Seite # 111 angewählt hat. Die Steuerungsschaltung 50 ermittelt zu dieser angewählten Seite die Anzahl und die Seitennummern der zugeordneten Ergänzungsseiten. Wird beispielsweise die Grundseite # 111 durch Ergänzungsdaten aus der übergeordneten Seite 110 ergänzt (Tabelle II), so trägt die Ergänzungsseite die Seitennummer # 11A. Sobald eine dieser Seiten im Zyklus auftritt, was der Steuerungsschaltung 50 von der Auskopplungsschaltung 20 mitgeteilt wird, erscheint auf der Ausgangsleitung 51 ein Freigabesignal für die Torschaltung 30, woraufhin die Grundseite # 111 beispielsweise über die Leitung 31 in den Speicherplatz # 1, die Ergänzungsseite 11A in den Speicherplatz # 2 des Seitenzwischenspeichers 40 abgelegt werden. Die Adressierung auf die Speicherplätze erfolgt, wie bereits erwähnt, unter der Steuerung der Steuerungsschaltung 50 über die Ausgangsleitung 52. Nach erfolgtem Einlesen der zwei betrachteten Seiten erzeugt die Steuerungsschaltung 50 über die Ausgangsleitung 53 einen Auslesebefehl für den Speicherplatz # 1, worauf die Grundseite # 111 über die Leitung 41 aus dem Seitenzwischenspeicher 40 an den Decoder für Grunddaten 80 ausgelesen wird. Der Decoder für Grunddaten 80 decodiert die Seite # 111 in geeigneter Weise und übergibt die daraus resultierenden Daten über die Leitung 91 an den Prozessor 90. Außerdem werden von der Steuerungsschaltung 50 über die Ausgangsleitung 53 ein Auslesebefehl für den Speicherplatz # 2 gegeben und die Ergänzungsseite 11A über die Leitung 42 an den Decoder für Ergänzungsdaten 81 ausgelesen. Der Decoder für Ergänzungsdaten 81 decodiert die Daten in dem besonders gekennzeichneten Abschnitt der Ergänzungsseite in geeigneter Weise und übergibt die resultierenden Daten über die Leitung 92 an den Prozessor 90, welcher die decodierten Daten aller drei Seiten zusammen als Videosignal mit den Komponenten R, G, B und S beispielsweise auf dem Bildschirm eines Fernsehempfängers darstellt.

In einer besonderen Ausführung besteht der Decoder für Grunddaten 80 aus einem Teletext-Level-1-Decoder und der Decoder für die in einem Bildschirmtext-Aufbaucode übertragenen Ergänzungsdaten aus einem Bildschirmtext (BTX)-Deocder.

Die Steuerungsschaltung 50 kann ferner gemäß dem ersten Ausführungsbeispiel nach erfolgtem Benutzerwunsch für die Seite # 100 eine automatische Belegung des restlichen Speicherplatzes # 4 des Seitenzwischenspeichers 40 mit einer weiteren Seite durchführen. Als nächstfolgende Seitennummer wird im Seitennummernspeicher 60 beispielsweise die Seite # 105 angetroffen. Außerdem ermittelt die Steuerungsschaltung 50 beispielsweise, daß für die Grundseite # 105 keine weitere Ergänzungsseite vorliegt. Die Seite # 105 kann folglich in der bereits beschriebenen Weise nach ihrem Auftreten im Teletextzyklus auf dem Speicherplatz # 4 zwischengespeichert werden.

Mit Hilfe des erfindungsgemäßen Verfahrens gemäß dem ersten Ausführungsbeispiel läßt sich der verfügbare Seitenzwischenspeicher 40 adaptiv und damit optimal ausnutzen, da nur so viele Seitenspeicherplätze reserviert werden müssen, wie tatsächlich zur Darstellung einer beliebigen Seite benötigt werden.

Ein weiterer Vorteil dieses Verfahrens besteht darin, daß fehlende Reihen in den Ergänzungsseiten auf einfache Weise festgestellt und gestörte Reihen einer geeigneten, nicht dargestellten Fehlerkorrekturschaltung zugeführt werden können. Die Steuerungsschaltung 50 "weiß" aus dem Seitennummernspeicher 60, ob und gegebenenfalls wieviele Ergänzungsseiten im Zyklus vorhanden sind. Da im ungestörten Falle normalerweise alle Reihen in einer Ergänzungsseite belegt sind bzw. bei einer nicht vollständig belegten Ergänzungsseite eine spezielle Schlußkennung in der letzten Reihe vorgesehen werden kann, lassen sich bei unvollständigen oder fehlenden Ergänzungsseiten der Such- und Ladevorgang für den Seitenzwischenspeicher 40 dementsprechend beeinflussen, und zwar in der Weise, daß nach und nach eine Seite mit allen Ergänzungsseiten vollständig und richtig zwischengespeichert wird.

Die Steuerungsschaltung 50 kann gemäß dem zweiten Ausführungsbeispiel ferner nach dem beschriebenen erfolgten Benut-Zerwunsch für die Seite # 111 eine automatische Belegung der restlichen zwei Speicherplätze # 3 und # 4 des Seitenzwischenspeichers 40 mit weiteren Seiten durchführen. Als nächstfolgende Seitennummer wird im Seitennummernspeicher 60 beispielsweise die Seite # 112 angetroffen. Außerdem ermittelt die Steuerungsschaltung 50 beispielsweise (Tab. IV), daß die Grundseite # 112 durch die Ergänzungsseite # 11C und den besonders gekennzeichneten Abschnitt von der bereits auf Speicherplatz # 2 geladenen Seite 11A ergänzt wird. Die Seiten # 112 und 110 können folglich in der bereits beschriebenen Weise nach ihrem Auftreten im Teletextsystem auf den Speicherplätzen # 3 und # 4 zwischengespeichert werden und auf Abruf zusammen mit den allgemeinen Daten aus Speicher # 2 auf dem Bildschirm dargestellt werden.

Mit Hilfe des erfindungsgemäßen Verfahrens gemäß dem zweiten Ausführungsbeispiel läßt sich der verfügbare Seitenzwischenspeicher 40 optimal ausnutzen, da die Ergänzungsdaten in den besonders gekennzeichneten Abschnitten für mehrere Grundseiten gelten und nicht jedesmal neu geladen werden müssen.

Ein Vorteil dieses Verfahrens besteht darin, daß die für Level 3 notwendige, zusätzliche Datenkapazität minimiert werden kann. Die Ergänzungsdaten können nicht nur für eine Seite, sondern auch für übergeordnete Seiten (Gruppen), einen Block oder für den gesamten Zyklus definiert werden. So kann z.B. eine neue Farbtabelle für den gesamten Zyklus, Sportlogos für den Block Sport und gleiche Überschriften für Nachrichtengruppen vereinbart werden.

## Patentansprüche

1. Verfahren zum Übertragen von sich vorzugsweise periodisch wiederholenden Teletextdaten in einem Fernsehsignal, bei dem gemäß einem Standard - z.B. gemäß dem sogen. Level 1 des Teletext-Standards WST (world System teletext) - empfangsseitig die Teletextdaten von dem Fernsehsignal getrennt, die zu jeweils einer Teletextseite gehörenden Daten gesammelt und die so zusammengestellten Teletextseiten zwischengespeichert werden, wobei sendeseitig zusätzlich zu den Teletext-Grunddaten von gemäß dem Standard aufgebauten Teletextseiten (Grundseiten) Ergänzungsdaten für jeweils eine Teletextseite in Form einer oder mehrerer zugeordneter Ergänzungsseiten mit Seitennummern im Hexadezimalsystem übertragen werden, welche empfangsseitig getrennt von den Grunddaten einer gewünschten Teletextseite zwischengespeichert und derart verarbeitet werden, daß an denjenigen Zeichenplätzen, wo keine Ergänzungsdaten vorliegen, die den Grunddaten zugeordneten Zeichen zur Anzeige gebracht werden, und daß an denjenigen Zeichenplätzen, wo Ergänzungsdaten vorliegen, die den Grunddaten im Zusammenwirken mit den Ergänzungsdaten zugeordneten Zeichen zur Anzeige gebracht werden, dadurch gekennzeichnet, daß die Ergänzungsseiten im Format von Teletextseiten gemäß dem Standard strukturiert sind und daß die im Hexadezimalsystem codierten Seitennummern der Ergänzungsseiten nach einem festgelegten Schema im Dezimalsystem geordneten - vorzugsweise per Zehnertastatur - anwählbaren Seitennummern der zugeordneten Teletext-Grundseiten zugeordnet sind.

2. Verfahren nach Anspruch 1, dadurch gekennzeichnet, daß in wenigstens einer Ergänzungsseite die Ergänzungsdaten für mehrere oder für alle Teletextseiten übertragen werden.

3. Verfahren nach Anspruch 1 oder 2, dadurch gekennzeichnet, daß die Ergänzungsdaten im Bildschirmtext-Aufbaucode übertragen werden.

4. Verfahren nach Anspruch 3, dadurch gekennzeichnet, daß empfangsseitig getrennte Decodierungen für die Grunddaten und die Ergänzungsdaten vorgesehen sind.

5. Verfahren nach einem der Ansprüche 1 bis 4, dadurch gekennzeichnet, daß eine gesonderte Information über die Anzahl von Ergänzungsseiten je zugeordneter, herkömmlicher Teletextseite übertragen wird.

6. Verfahren nach einem der Ansprüche 1 bis 5, dadurch gekennzeichnet, daß eine gesonderte Information darüber übertragen wird, ob und ggfs. wieviele Ergänzungsseiten mit Ergänzungsdaten für mehrere Teletextseiten sowie ob und ggfs. wieviele Ergänzungsseiten nur mit seitenspezifischen Ergänzungsdaten je zu ergänzender Teletextseite im Teletextzyklus enthalten sind.

7. Verfahren nach einem der Ansprüche 1 bis 6, dadurch gekennzeichnet, daß eine weitere, gesonderte Information über die Anzahl der genutzten Reihen zumindest in einer Ergänzungsseite übertragen wird.

8. Verfahren nach einem der Ansprüche 1 bis 7, dadurch gekennzeichnet, daß die gesonderte Information im Format einer Ergänzungsseite übertragen wird.

9. Verfahren nach einem der Ansprüche 1 bis 8, dadurch gekennzeichnet, daß zumindest die für mehrere Teletextseiten geltenden Ergänzungsdaten mit einem gegenüber den Grunddaten erhöhten Fehlerschutz übertragen werden.

10. Verfahren nach einem der Ansprüche 1 bis 9, dadurch gekennzeichnet, daß die Ergänzungsdaten mit einem gegenüber den Grunddaten erhöhten Fehlerschutz übertragen werden.

11. Verfahren nach einem der Ansprüche 1 bis 10, dadurch gekennzeichnet, daß die Ergänzungsdaten zumindest teilweise Fehlerschutzdaten für die zugeordneten Grunddaten darstellen, welche empfangsseitig zur Korrektur und ggfs. zur Substitution von zugeordneten, gestörten Grunddaten verwendet werden.

## Claims

1. Method of transmitting preferably periodically repeated items of teletext data in a television signal, in which the items of teletext data are separated from the television signal at the receiving end in accordance with a standard - e.g. in accordance with the so-called Level 1 of the WST teletext standard (world system teletext), the respective items of data appertaining to a teletext page are collected and the thus assembled teletext pages are buffer stored, wherein, at the transmitting end, supplementary items of data for a respective teletext page in the form of one or more associated supplementary pages having page numbers in the hexadecimal system are transmitted in addition to the basic items of teletext data of teletext pages (basic pages) built-up in accordance with the standard, which supplementary items of data are buffer stored separately from the basic items of data of a wanted teletext page at the receiving end and are processed in such a way that at those character locations where there are no supplementary items of data, the characters associated with the basic items of data are displayed and that at those character locations where there are supplementary items of data, the characters associated with the basic items of data are displayed in combination with the characters associated with the supplementary items of data, characterised in that, the supplementary pages are structured in the format of teletext pages in accordance with the standard and that the page numbers of the supplementary pages, which are coded in the hexadecimal system, are associated in accordance with a predefined plan with selectable - preferably by means of a numeric keypad - page numbers of the associated teletext basic pages which are organised in the decimal system.

2. Method in accordance with Claim 1, characterised in that, the supplementary items of data for a plurality or for all of the teletext pages are transmitted in at least one supplementary page.

3. Method in accordance with Claim 1 or 2, characterised in that, the supplementary items of data are transmitted in the interactive video set-up code.

4. Method in accordance with Claim 3, characterised in that, separate decoding means are provided for the basic items of data and the supplementary items of data at the receiving end.

5. Method in accordance with any of the Claims 1 to 4, characterised in that, a special item of information is transmitted regarding the number of supplementary pages per associated, conventional teletext page.

6. Method in accordance with any of the Claims 1 to 5, characterised in that, a special item of information is transmitted as regards whether, and if so, how many, supplementary pages including supplementary items of data for a plurality of teletext pages are contained in the teletext cycle, as well as whether, and if so, how many, supplementary pages including only supplementary items of data that are specific to a page of each teletext page that is to be supplemented are contained in the teletext cycle.

7. Method in accordance with any of the Claims 1 to 6, characterised in that, a further special item of information regarding the number of utilised rows is transmitted in at least one supplementary page.

8. Method in accordance with any of the Claims 1 to 7, characterised in that, the special item of information is transmitted in the format of a supplementary page.

9. Method in accordance with any of the Claims 1 to 8, characterised in that, at least the supplementary items of data relevant for a plurality of teletext pages are transmitted with an error protection that is increased with respect to the basic items of data.

10. Method in accordance with any of the Claims 1 to 9, characterised in that, the supplementary items of data are transmitted with an error protection that is increased with respect to the basic items of data.

11. Method in accordance with any of the Claims 1 to 10, characterised in that, the supplementary items of data at least partly represent error protection items of data for the associated basic items of data which are used at the receiving end for correcting and, if necessary, for the substitution of the associated basic items of data that have been subjected to interference.

**Revendications**

1. Procédé de transmission de données télétexte dans un signal télévisuel, ces données se répétant de préférence, dans lequel, du côté récepteur, selon une norme - par exemple ce qu'on appelle le Level 1 de la norme télétexte WST (world system teletext) -, les données télétexte sont isolées du signal télévisuel, les données faisant partie d'une page télétexte sont regroupées et les pages télétexte ainsi constituées sont stockées dans une mémoire intermédiaire, et dans lequel, du côté émetteur, on transmet en plus des données de base télétexte des pages télétexte structurées selon la norme (pages de base), des données complémentaires pour respectivement une page de télétexte sous la forme d'une ou de plusieurs pages complémentaires correspondantes avec des numéros de page du système hexadécimal, ces données complémentaires étant, du côté récepteur, stockées dans une mémoire intermédiaire séparément des données de base de la page télétexte voulue et traitées de manière à ce que, pour chaque position de caractère ne présentant pas de données complémentaires, les caractères correspondants aux données de base soient affichés, et à ce que , pour chaque position de caractère présentant des données complémentaires, les caractères correspondants aux données de base de manière concourante avec les données complémentaires soient affichés, **caractérisé en ce que** les pages complémentaires sont structurées en format de pages télétexte selon la norme et que les numéros de page des pages complémentaires, codés dans le système hexadécimal, sont affectés, d'après un schéma précis, à des numéros de page des pages de base télétexte attribuées, ces numéros de page étant ordonnés selon le système décimal et sélectionnables - de préférence au moyen d'un clavier de dix touches -.

2. Procédé selon la revendication 1, **caractérisé en ce que** les données complémentaires pour plusieurs ou pour toutes les pages télétexte sont transmises dans au moins une page complémentaire.

3. Procédé selon la revendication 1 ou 2, **caractérisé en ce que** les données complémentaires sont transmises en code format vidéotex.

4. Procédé selon la revendication 3, **caractérisé en ce que**, de côté du récepteur, on prévoit des décodages séparés pour les données de base et les données complémentaires.

5. Procédé selon une des revendications 1 à 4, **caractérisé en ce qu'** on transmet une information séparée sur la quantité de pages complémentaires par page télétexte traditionnelle attribuée.

6. Procédé selon une des revendications 1 à 5, **caractérisé en ce qu'**on transmet une information séparée sur la présence ou non de pages complémentaires avec des données complémentaires pour plusieurs pages télétexte et, le cas échéant, sur leur quantité, ainsi que sur la présence ou non de pages complémentaires ne comportant que des données complémentaires pour une page spécifique pour chaque page télétexte du cycle télétexte à compléter, et le cas échéant, sur la quantité de ces pages complémentaires.

7.  Procédé selon une des revendications 1 à 6, **caractérisé en ce qu'**on transmet, dans une page complémentaire au moins, une autre information séparée sur le nombre de rangées utilisées.

8.  Procédé selon une des revendications 1 à 7, **caractérisé en ce qu'**on transmet l'information séparée dans le format d'une page complémentaire.

9.  Procédé selon une des revendications 1 à 8, **caractérisé en ce qu'**au moins les données complémentaires valables pour plusieurs pages de télétexte sont transmises avec un contrôle d'erreur plus élevé que pour les données de base.

10. Procédé selon une des revendications 1 à 9, **caractérisé en ce que** les données complémentaires sont transmises avec un contrôle d'erreur plus élevé que pour les données de base.

11. Procédé selon une des revendications 1 à 10, **caractérisé en ce que** les données complétaires représentent, au moins en partie, des données de contrôle d'erreur pour les données de base correspondantes, ces données de base étant utilisées, du côté récepteur, pour la correction et, le cas échéant, le remplacement de données de base correspondantes erronées.

o

Seiten-Nr.

Magam- u. Reiten-Nr.

"Level 1" -Seite

23

+

26

26

26

F I G . 1

Seiten-Nr.

Magam- u. Reiten-Nr.

"Level 1" - Seite

+

Seiten-Nr.

Magam- u. Reiten-Nr.

Ergänzungsseite(n)

F I G . 2

11

100 0000

"Level 1"-Seite

10A 0001

Ergänzungsdaten
für mehrere
"Level 1"-Seiten

Ergänzungsseite 1

10A 0002

Ergänzungsdaten
für 100 0000

Ergänzungsseite 2

Ergänzungsdaten
aus Seite 10A 0001

104 0001

"Level 1"-Seite

10E 0100

Ergänzungsdaten
für 104 0001

Ergänzungsseite

FIG. 3

Videosignal

Abtrenn-stufe ~10

Eingabe

Seiten-nummer ~70

12

11

Seiten-nummern-auskopp-lung 20

Tor ~30

71

21

50

Freigabe 51 31 40

Steuerung

Einlese-AdreBierung 52

Seiten-zwischen-speicher

61

54

60

Seiten-nummern-speicher

Datenlese-leitung

44 42

Decoder für Grunddaten 80

Decoder für Ergänzungs-daten 81

53

91 92

Prozessor ~90

R G B S

Auslese-AdreBierung

# FIG.4